# DEMANDE DE BREVET EUROPEEN

(11) **EP 1 543 866 A1**
(43) Date de publication de la demande: **22.06.2005**
(21) Numéro de dépôt: 04300766.5
(22) Date de dépôt: 08.11.2004
(51) Int. Cl.: A62B 7/14, B64D 11/00, B64D 13/00

(54) **Aéronef de transport avec des masques d'oxygène pour l'équipage**

(30) Priorité: 15.12.2003 FR 0351052
(71) Demandeur: L'Air Liquide S. A. à Directoire et Conseil de Surveillance pour l'Etude et l'Exploitation des Procédés Georges Claude, 75321 Paris Cedex 07 (FR)
(72) Inventeur: CAZENAVE, Jean-Michel, 38180, SEYSSINS (FR)
(74) Mandataire: Le Moenner, Gabriel

(57) **Abrégé**

L'aéronef de transport comprend un compartiment pour l'équipage (I) équipé d'au moins un masque régulateur à mise en place rapide (8) connectable à une source d'oxygène sous pression (5) et au moins un masque à port permanent (12) connectable à un générateur d'oxygène ou d'air enrichi embarqué (O) via un régulateur de pression et de débit (11), et un compartiment de transport (II) comprenant au moins un masque (17 ;19) connectable à la source d'oxygène (5) et/ou au générateur d'oxygène embarqué (O).

Ainsi, l'aéronef, conçu comme un appareil de transport militaire, permet une certification rapide mixte militaire et civile.

## Description

La présente invention concerne les aéronefs de transport, du type comprenant un compartiment de transport et un compartiment pour l'équipage, et un système de fourniture d'oxygène comprenant un générateur d'oxygène embarqué et au moins une source d'oxygène gazeux.

La présente invention concerne plus particulièrement une architecture d'aéronef de transport à vocation de transport militaire, offrant une grande versatilité d'application et permettant de ce fait une certification mixte militaire et civile.

Pour ce faire, selon un aspect de l'invention, le compartiment pour l'équipage comprend au moins un masque régulateur à mise en place rapide connectable à la source d'oxygène et au moins un masque à port permanent connectable au générateur d'oxygène.

Selon d'autres caractéristiques plus particulières de l'invention :
- le compartiment de transport comprend au moins un masque connectable à la source d'oxygène et/ou au moins un masque connectable au générateur d'oxygène embarqué,
- le masque à port permanent du compartiment pour l'équipage est connectable au générateur d'oxygène embarqué via un régulateur de pression et de débit,
- le générateur d'oxygène embarqué est du type à adsorbeurs PSA, contenant typiquement un adsorbant zéolitique,
- l'aéronef est conçu comme un appareil de transport militaire.

D'autres caractéristiques et avantages de l'invention ressortiront de la description suivante de modes de réalisation, donnée à titre illustratif mais nullement limitatif, faite en relation avec les dessins annexés, sur lesquels :

La figure unique représente schématiquement un schéma d'implantation de fourniture d'oxygène dans un aéronef de transport selon l'invention.

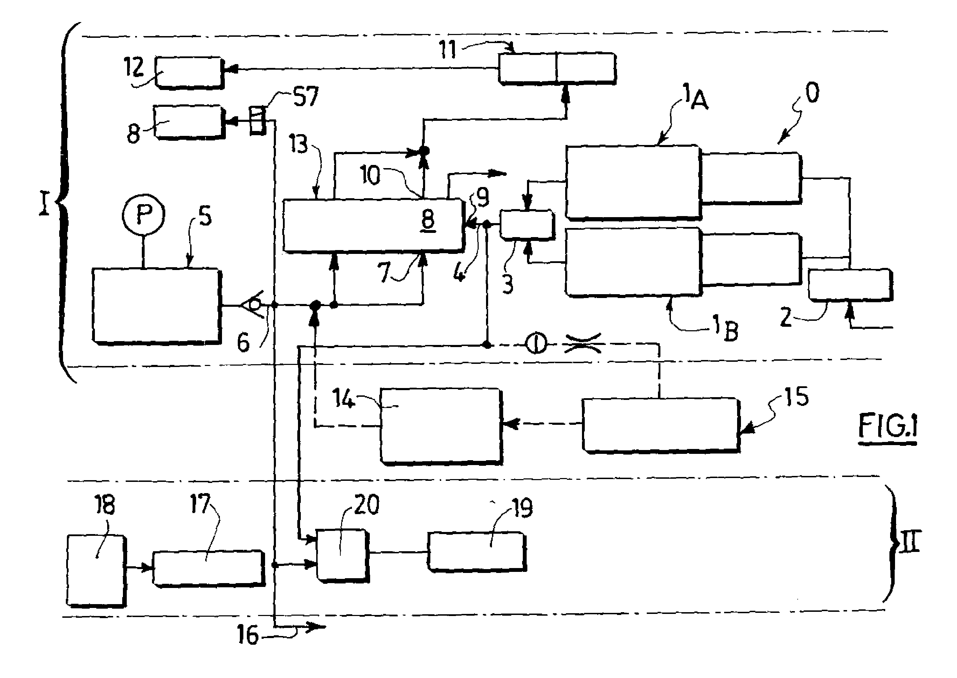

Sur la figure 1, on a représenté schématiquement une organisation d'un aéronef de transport comprenant notamment un compartiment pour l'équipage (I) et un compartiment de transport (II) pour le transport de matériel et/ou de personnes.

L'aéronef est équipé d'un générateur d'oxygène, désigné généralement par la référence O, du type à adsorbeurs à variation cyclique de pression PSA, (généralement désigné par l'acronyme anglais OBOGS) comprenant au moins deux adsorbeurs 1A,1B, à adsorbant zéolitique, notamment LiX, avantageusement du type décrit dans la demande de brevet FR 03 02708 au nom de la demanderesse, recevant, via un filtre 2, de l'air sous pression provenant des moteurs de l'aéronef et opérant en alternance pour fournir, via un filtre de sortie 3 un mélange gazeux enrichi en oxygène dans une canalisation de sortie 4.

L'aéronef comporte également, dans le compartiment pour équipage 1, au moins une source d'oxygène sous pression 5, généralement constituée par une pluralité de bouteilles de gaz sous une pression supérieure à 100 bars reliée à une canalisation de sortie 6.

Selon un aspect de l'invention, la canalisation de sortie 6 est connectable directement, via éventuellement un dispositif à déclenchement automatique 57, à un jeu 8 de masques régulateurs à mise en place rapide (généralement désignés sous l'acronyme anglo-saxon QDM) et à une entrée 7 d'un organe sélecteur distributeur/régulateur 8 ayant une seconde entrée 9 reliée à la sortie 4 du générateur d'oxygène O.

Selon un aspect de l'invention, le régulateur/distributeur 8, avantageusement de type motorisé, comporte une sortie 10 connectable, via un régulateur de pression et de débit 11, à un jeu 12 de masques militaires à port permanent éventuellement associés à un équipement de protection Biologique/Chimique. Le régulateur-distributeur 8 peut être sélectivement bipassé par un dispositif de bi-passe 13 permettant de relier directement la sortie 6 de la source 5 au régulateur 11.

On comprendra de ce qui précède que l'équipage dans le compartiment I comporte à sa disposition les masques régulateurs à mise en place rapide 8 connectables directement à la source 5, comme dans tous les systèmes d'équipage d'avions civils actuellement en service, permettant ainsi de certifier l'aéronef selon les règlements civils (type FAR 25) pour assurer une utilisation logistique de transport comparable à celle d'un avion de transport civil, permettant à l'équipage de voler sans équipements individuels de protection permanents, ces derniers n'étant employés qu'en cas de dépressurisation brutale ou de fumées cabine.

Selon un aspect de l'invention, l'équipage à également à sa disposition, outre le stockage d'oxygène gazeux haute pression 5, le générateur d'oxygène embarqué O permettant, via le régulateur 11 et les masques adaptés 12, à l'équipage d'opérer dans le cadre de missions tactiques en étant continuellement alimenté en oxygène, en satisfaisant ainsi aux différents standards militaires en vigueur (STANAG, MIL-SPEC...).

La source d'oxygène 5 peut-être complétée par des bouteilles d'oxygène sous pression portables 14, alimentées, à partir de la sortie d'oxygène moyenne pression 4 du générateur O, via un multiplicateur de pression 15 pour suppléer la source 5, ou pour usage individuel, vers une sortie médicale 16.

Le compartiment de transport de passagers II comporte, pour sa part, un jeu 17 de masques à port temporaire connectables à des générateurs d'oxygène chimiques 18 et/ou des masques à port temporaire 19 connectables, via une vanne de régulation à double entrée 20, à la sortie de la source d'oxygène 5 ou à la sortie 4 du générateur d'oxygène O, dans un agencement tel que celui décrit dans le document PCT/FR03/50066 au nom de la demanderesse.

Avec l'un ou l'autre de ces types d'alimentation en oxygène, le compartiment de transport peut être de facto certifié en conformité avec les standards d'aviation civile susmentionnés.

Quoique l'invention ait été décrite en relation avec des modes de réalisation particuliers, elle ne s'en trouve pas limitée mais est susceptible de modifications et de variantes qui apparaîtront à l'homme du métier dans le cadre des revendications ci-après.

## Revendications

1. Aéronef de transport, comprenant un compartiment de transport (2), un compartiment pour l'équipage (I), et un système de fourniture d'oxygène comprenant un générateur d'oxygène embarqué (O) et au moins une source d'oxygène embarquée (5 ;18), le compartiment pour l'équipage (I) comprenant :
- au moins un masque régulateur à mise en place rapide (8) connectable à la source d'oxygène (5) ; et
- au moins un masque à port permanent (12) connectable au générateur d'oxygène embarqué (O).

2. Aéronef selon la revendication 1, **caractérisé en ce que** le masque à port permanent (12) est connectable au générateur d'oxygène (O) via un régulateur de pression et de débit (11 ).

3. Aéronef selon la revendication 1 ou 2, **caractérisé en ce que** le compartiment de transport (II) comprend au moins un masque (17 ;19) connectable à la source d'oxygène (5 ;18).

4. Aéronef selon l'une des revendications 1 à 3, **caractérisé en ce que** le compartiment de transport (2) comprend au moins un masque (19) connectable au générateur d'oxygène (O).

5. Aéronef selon la revendication 4, **caractérisé en ce qu'**il comporte une vanne (20) de régulation à double entrée reliées respectivement au générateur d'oxygène (O) et à la source d'oxygène (5), dont la sortie est reliée audit masque (19) du compartiment de transport.

6. Aéronef selon l'une des revendications précédentes, **caractérisé en ce que** le générateur d'oxygène (O) est du type à adsorbeurs PSA (1A, 1B).

7. Aéronef selon l'une des revendications précédentes, **caractérisé en ce qu'**il est conçu comme un appareil de transport militaire.
